Europäisches Patentamt

(19) European Patent Office  (11) Publication number: **0 169 063**

Office européen des brevets  **B1**

(12) **EUROPEAN PATENT SPECIFICATION**

(45) Date of publication of patent specification: **26.04.89**  (51) Int. Cl.⁴: **B 66 C 23/90,** G 01 M 19/00

(21) Application number: **85305099.5**

(22) Date of filing: **17.07.85**

(54) **Support module and assembly for load testing bags.**

(30) Priority: **17.07.84 GB 8418144**

(43) Date of publication of application:·
**22.01.86 Bulletin 86/04**

(45) Publication of the grant of the patent:
**26.04.89 Bulletin 89/17**

(84) Designated Contracting States:
**DE FR GB NL SE**

(56) References cited:
**EP-A-0 018 075**
**FR-A-2 296 171**
**GB-A-2 072 351**
**US-A-2 614 704**
**US-A-4 142 754**
**US-A-4 185 862**

(73) Proprietor: **WATER WEIGHTS LIMITED**
**Unit 1A Woodside Road**
**Bridge of Don Aberdeen Scotland (GB)**

(72) Inventor: **Abraham, Arthur Graham**
**Gady House Leslie Insch**
**Aberdeenshire Scotland (GB)**
Inventor: **Campbell, Melfort**
**Mains of Altries Marycutler**
**Aberdeen Scotland (GB)**

(74) Representative: **Jenkins, Richard Gray et al**
**R.G.C. Jenkins & Co. 26 Caxton Street**
**London SW1H 0RJ (GB)**

## Description

The present invention relates to a support module for suspending a plurality of load testing bags made of fluid impermeable material and adapted to be suspended from a support point and filled with fluid to test the load bearing strength of hoists, winches, cranes and similar lifting devices.

It is known from U.K. Patent No. 2 047 414B to suspend more than one bag from a single support shackle for the purpose of testing the strength of a crane but the number of bags which can be suspended in this way is very limited due to the bulk of the bags when filled with fluid.

It is also known from EP—A1—0 018 075 to use a spreader for carrying a plurality of bags, in the form of a support frame having a plurality of equiangularly spaced arms radiating outwardly from a central node with a suspension point for a load testing bag at the outer end of each arm. The spreader itself is suspended from a support point positioned directly above the node by means of ropes and shackles. It is then possible to suspend a second tier of bags below the first tier simply by hooking these directly to connectors which extend through the bags in the first tier. However, this type of spreader takes up a relatively large area and, suspension of a second tier of bags below the first requires a relatively large vertical space which, in some testing situations, is not available.

It is therefore an object of the present invention to provide a support module which will enable a substantially greater volume of liquid, and therefore weight to be suspended in a given space than was possible hitherto.

According to the present invention there is provided a support module for a plurality of load testing bags comprising a support frame having a plurality of bag suspension means from each of which a load testing bag can be suspended at a common level, the plurality of bag suspension means being angularly and equidistantly spaced from a centrally disposed support means, characterised by having also a bag suspension means disposed centrally at a lower level from which a load testing bag can be suspended at the lower level so that the upper portion of the bag suspended from the lower level will nest between lower portions of the bags suspended from their common level.

An important advantage of a support module according to the present invention is that it enables a plurality of load testing bags to be suspended from a support in a compact, space saving manner. In particular, the lower bag nests partially between the upper bags thus reducing the height required for a two tier arrangement. This is particularly advantageous in a load testing situation where the height between the crane hook or other lifting member and the ground is limited.

Preferably, the frame comprises an even number of suspension means at the common, upper, level.

In a particular embodiment, the suspension means are at the apices of an inverted square base pyramid. This shape has been found to give the optimum load balancing results in practice and enables four bags to be suspended at the common, upper, level and a single bag to be suspended at the lower level partially nesting between the four upper bags, thus saving space in a horizontal plane and height.

Preferably, the frame is in the form of a dismantlable assembly of struts and the struts may be of tubular steel. The frame may be constituted by a plurality of interconnected struts comprising a vertical, load-bearing centre pin having at its upper end the support means by which the frame can be suspended from a support point, and at its lower end the bag suspension means for suspending a load testing bag at the lower level; a plurality of spacing arms extending radially outwardly in a horizontal plane from the centre pin adjacent its upper end; and an equal plurality of load bearing arms each extending radially outwardly from the centre pin adjacent its lower end towards the radially outer end of a corresponding spacing arm the radially outer end of each load bearing arm and of its corresponding spacing arm being connected to a bag suspension means.

The bag suspension means may each comprise a padeye.

According to another aspect of the invention, there is provided a support module assembly being assembled from support modules as described above for suspending a plurality of load testing bags and comprising a plurality of such support modules connected together at their outermost frame portions or with tie bars connecting the support modules at their support means.

Thus a module according to the present invention can be interlinked with other like modules to form an assembly enabling different test loads to be made up in a simple and convenient manner and is therefore more versatile than the known arrangements.

Horizontal tie bars may be used to interconnect the support frames and various, symmetrical arrangements of a plurality of modules are envisaged. Means may be provided for connecting one or more further bars to the cross-bar, which means may be for connecting two further bars to the centre of the tie bar and at right angles to the tie bar. The connecting means may comprise a rigid sleeve provided with a transverse bore for receiving the tie bar and means at each end for connection to a further bar.

A support assembly may also comprise a pair of modules interconnected by a joint common to both modules. The joint may comprise means for suspending a load testing bag.

A load testing assembly comprising a support assembly as herein described and supporting a plurality of load testing bags is preferably arranged so that adjacent ones of the bags, when filled, abut one another thereby to equalise lateral forces. This feature is particularly advantageous because it obviates the need for equalising links interconnecting the suspension points of the load testing bags which have been necessary with known support arrangements.

One or more of the bags may comprise a load supporting cable extending therethrough to enable suspension of a bag directly below the or each bag comprising the load supporting cable. preferably, a load testing assembly comprising a plurality of interconnected spreader modules supporting a plurality of load testing bags is arranged so that adjacent ones of the bags, when filled, on adjacent ones of the modules abut one another thereby to equalise lateral forces.

In a load testing assembly according to the present invention the connecting means at the top of each module may be arranged so as to permit suspension of the assembly from a device to be load tested without undesirable sideways load forces being applied to the connecting means.

A particular embodiment of the present invention will now be described, by way of example, with reference to the accompanying drawings in which:

Figure 1 is a perspective view of a module according to the present invention;

Figure 2 is a side view of the module of Figure 1;

Figure 3 is a plan view of the module shown in Figures 1 and 2;

Figure 4 is a side view of one of the joints on the module of Figures 1—3;

Figure 5 is a plan view from above of the joint of Figure 4 and omitting the lower arm;

Figure 6 is a cross-sectional view along the lines VI—VI of Figure 4;

Figures 7 and 8 are schematic side and plan views respectively of a module according to the present invention supporting load testing bags;

Figures 9 and 10 are schematic side and plan views of two interconnected modules supporting load testing bags;

Figures 11 and 12 are schematic plan and side views of four interconnected modules supporting load testing bags;

Figure 13 is a side view of a joint interconnecting two of the modules in Figures 11 and 12;

Figure 14 is a perspective view of the intersection of the cross bars in Figure 11 and 12.

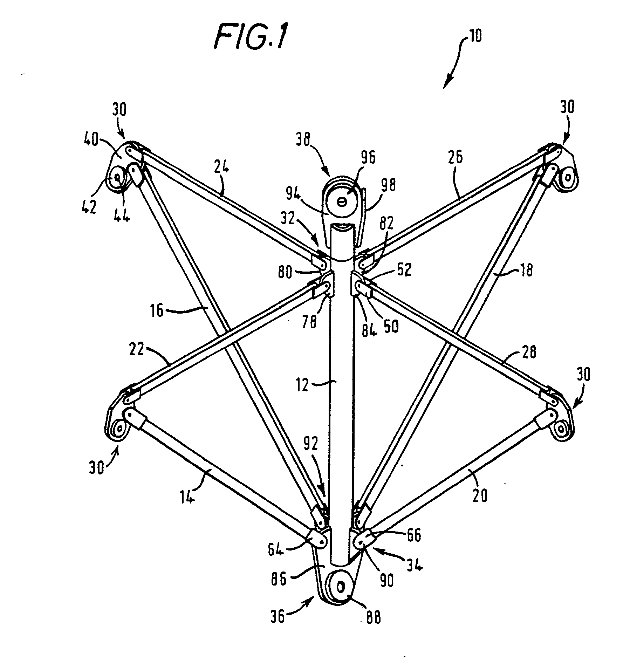

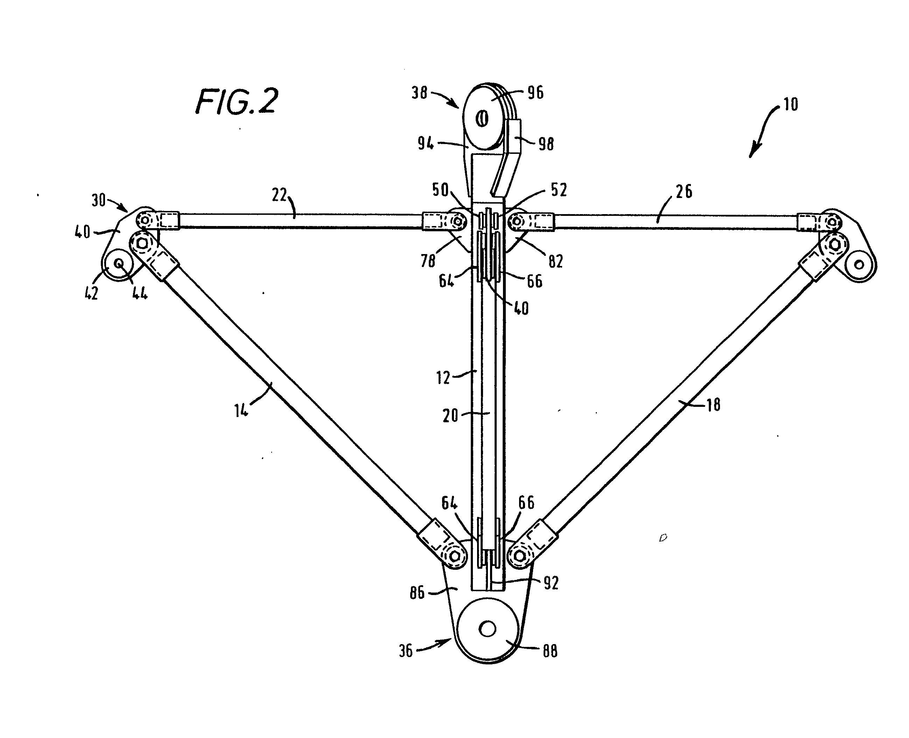

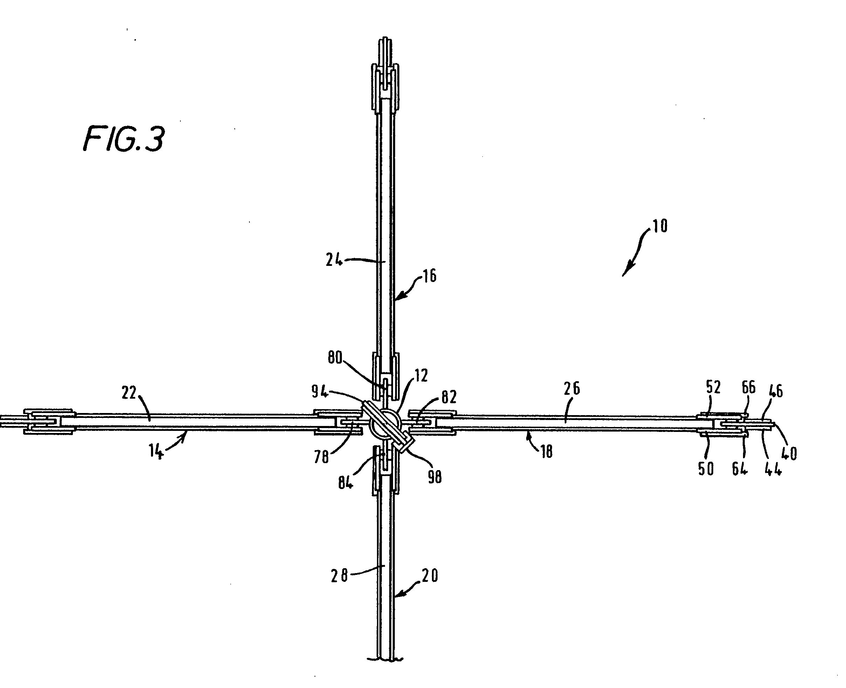

Referring to Figures 1—3, a support module indicated generally at 10 comprises a centre pin 12, four load bearing arms 14, 16, 18 and 20 and four spacer bars 22, 24, 26 and 28, all made of tubular steel. The centre pin 12 is of circular cross-section and the load bearing arms 14, 16, 18 and 20 and the spacer bars 22, 24, 26, 28 are of square cross-section. The load bearing arms have a greater cross-sectional area than the spacer bars.

The overall shape of the module 10 is that of a square base pyramid and the angle subtended by each of the spacer bars 22, 24, 26 and 28 to the adjacent load bearing arms 14, 16, 18 and 20, respectively, is approximately 45°.

There is a joint indicated generally at 30 between each of the load bearing arms 14, 16, 18 and 20 and the adjacent one of the spacer bars 22, 24, 26 and 28 which will be described in detail below as will the joints indicated generally at 32 between each spacer bar 22, 24, 26 and 28 and the centre pin 12 and the joints indicated generally at 34 between the load bearing arms 14, 16, 18 and 20 and the centre pin 12. There are connectors 36 and 38 contiguous with the bottom and top of the centre pin 12, respectively.

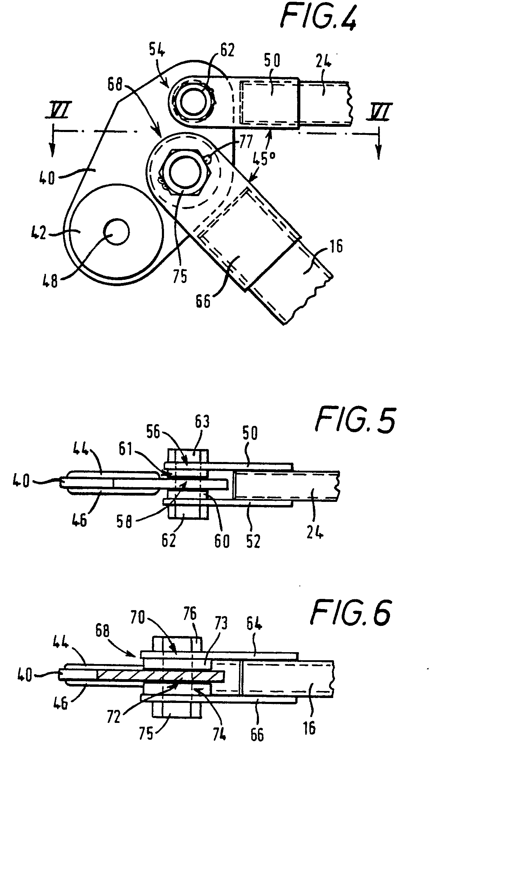

Referring to Figures 4—6, each of the joints 30 comprises a centre plate 40 provided with a padeye 42 from which a load testing bag may be suspended. The padeye 42 consists of two aligned annular plates 44 and 46 welded to opposed sides of the centre plate 40 and aligned with an aperture in the plate 40 thus providing a through bore 48.

The joints 30 are all the same and the one shown in Figure 4 is the one joining the spacer bar 24 and the load bearing arm 16.

Referring both to Figure 4 and Figure 5, the end of the spacer bar 24 adjacent the joint 30 has welded thereto two aligned plates 50 and 52 each having a rounded end 54 comprising an aperture 56. The apertures 56 are aligned on either side of an aperture 58 in a top portion of the centre plate 40 and there is a washer 60 interposed between each of the plates 50 and 52 and the centre plate 40. A shackle bolt 61 and hexagonal nuts 62 and 63 are used to bolt the spacer bar 24 to the centre plate 40.

Referring to Figure 4 and Figure 6, the end of the load bearing arm 16 adjacent the joint 30 has welded thereto two aligned plates 64 and 66, each having a rounded end 68 provided with an aperture 70. The aperture 70 in each of the plates 64 and 66 is aligned with an aperture 72 formed in the centre plate 40. A washer 73 is interposed between each of the plates 64 and 66 and the centre plate 40 and a shackle bolt 74 is passed through the apertures 70 and 72 and has hexagonal nuts 75 and 76 and a split cotter pin 77 to secure the load bearing arm 16 to the centre plate 40.

The spacer bars 22, 24, 26 and 28 also each have a pair of the plates 50 and 52 at the end adjacent the centre pin 12 and these are bolted to one of four outwardly radiating flanges 78, 80, 82 and 84 in a similar manner to that shown in Figure 5.

The connector 36 contiguous with the bottom of the centre pin 12 comprises a centre plate 86 welded to the centre pin 12 and a padeye 88. The base of the centre pin 12 also has two outwardly radiating flanges 90 and 92.

Each of the load bearing arms 14, 16, 18 and 20 comprises a pair of the plates 64 and 66 at the end adjacent the centre pin 12 and these are bolted to the centre plate 86 of the connector 36 or to the flanges 90 and 92 as appropriate in a similar manner to that shown in Figure 6.

The connector 38 is welded to the top of the centre pin 12 and comprises a centre plate 94 provided with a padeye 96 and a stiffening plate 98. The stiffening plate 98 resists bending of the connector 38 in the event of lateral forces being applied to the connector 38 which would happen if the load carried by the module 10 were to swing or twist. The centre plate 94 is positioned at 45° to each of the spacer bars 22, 24, 26 and 28 which has been found to be the most suitable angle with regard to the angle of the load applied to the padeye 96 when two- and four-module arrangements are used as will be hereinafter described.

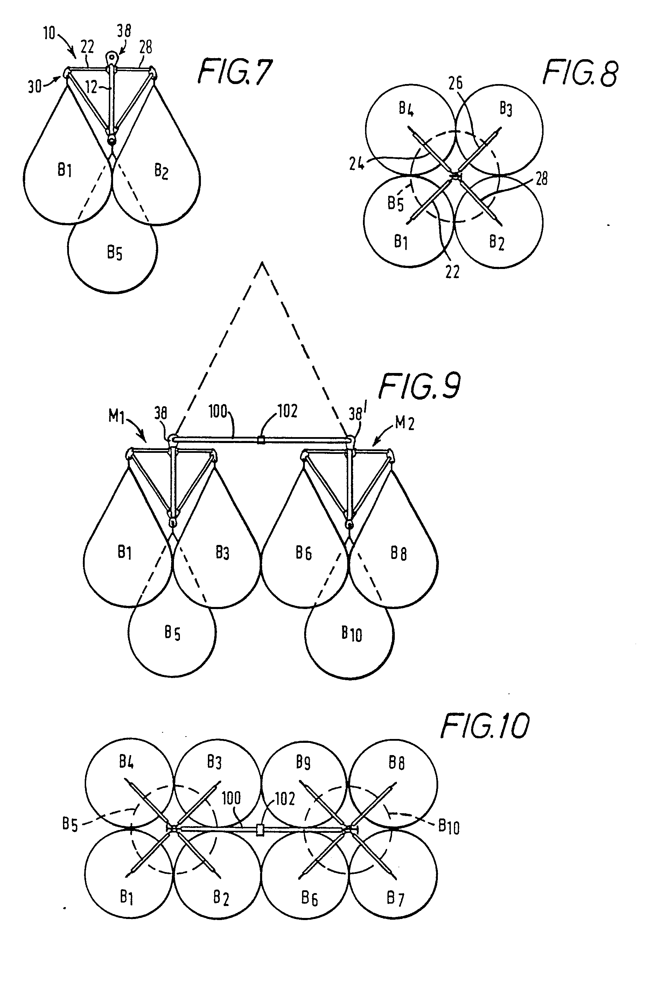

Referring to Figure 7 and Figure 8, the module 10 is shown supporting five load testing bags $B_1$—$B_5$. The load testing bags $B_1$—$B_5$ have been indicated schematically for clarity. Each load testing bag is made of fluid impermeable material and has an inlet for fluid at the top of the bag and a outlet for fluid at the bottom of the bag and is adapted for suspension from a support. A particular load testing bag is disclosed in our U.K. Patent No. 2 047 414B. In use, the four bags $B_1$—$B_4$ are each suspended, when empty, from one of the padeyes 42 adjacent the top of each of the load bearing arms 14, 16, 18 and 20 and the fifth bag E is suspended from the padeye 88 at the bottom of the centre pin 12. The connector 38 is connected to the lifting device to be tested before the bags $B_1$—$B_5$ are filled with fluid. The bags $B_1$—$B_5$ are then filled with fluid symmetrically and simultaneously so as to balance the weight of the fluid during filling. For example, possible filling operations could include: filling bags $B_1$—$B_4$ simultaneously and subsequently filling bag $B_5$; filling bags $B_1$ and $B_3$ simultaneously, subsequently filling bags $B_2$ and $B_4$ simultaneously and finally filling bag $B_5$; filling bags $B_1$, $B_3$ and $B_5$ simultaneously and subsequently filling bags $B_3$ and $B_4$ simultaneously. After filling, the upper part of the bag $B_5$ nests between the bags $B_1$—$B_4$ thus enabling space and height to be saved. It has been found that the inverted square base pyramid shape of the module has particularly advantageous load-balancing qualities. The weight of the bags $B_1$—$B_4$ acts downwardly along the load bearing arms 14, 16, 18 and 20 and places these load bearing arms under compression against the centre plate 86 of the connector 36. The weight of the bag $B_5$ pulls downwardly on the centre pin 12 placing the centre pin under tension. The bags $B_1$—$B_4$, when filled, support each other against lateral forces (see Figure 8), thus obviating the need for equalising links interconnecting the four joints 30.

Each of the bags $B_1$—$B_5$ weighs 40 tonnes (40,000 kg) when filled with fluid therefore the weight of the modular arrangement shown in Figures 7 and 8 is approximately 200 tonnes (200,000 kg).

Less than five bags may be suspended using module 10 if desired as long as the bags are arranged, and filled, symmetrically as described above. Examples of possible arrangements referring to the bags shown in Figures 7 and 8 are: bags $B_1$, $B_3$ and $B_5$; bags $B_1$—$B_4$; bag $B_5$ on its own.

Referring to Figures 9 and 10, the module 10 ($M_1$) is connected to a similar module $M_2$ by a cross bar 100. The cross bar 100 is of square section tubular steel and is fastened at each end to the connectors 38 and 38' of the modules $M_1$ and $M_2$, respectively. The ends of the cross bar 100 are provided with parallel plates which fit over the padeye 96 and are bolted thereto. There is a square section bracket 102 disposed centrally of the cross bar 100 to enable another bar to be attached at right angles to the cross bar 100 if desired.

The dotted lines in Figure 9 represent cables for attaching the modules $M_1$ and $M_2$ to the device to be tested. Each of these cables is attached to the padeye 96 of the respective module 10 or 10' by a shackle (not shown). The angle of the padeye 96 has been chosen so that the shackles are able to swivel under load in the padeye 96 without applying any side load to the padeye 96.

This arrangement enables ten load testing bags $B_1$—$B_{10}$ to be suspended as shown in Figure 10. The lower bags $B_5$ and $B_{10}$ nest in between the upper bags $B_1$—$B_4$ and $B_6$—$B_9$, respectively, thus saving height and space. Adjacent ones of the bags $B_1$—$B_4$ and $B_6$—$B_9$ abut one another thus balancing lateral forces.

Each of the bags $B_1$—$B_{10}$ weighs 40 tonnes (40,000 kg) therefore the weight of the entire load testing arrangement shown in Figures 9 and 10 is approximately 400 tonnes (400,000 kg).

The modular arrangement shown in Figures 9 and 10 may be employed using less than ten load testing bags provided that these are arranged symmetrically, for example, using only bags $B_1$—$B_8$ or only bags $B_5$ and $B_{10}$.

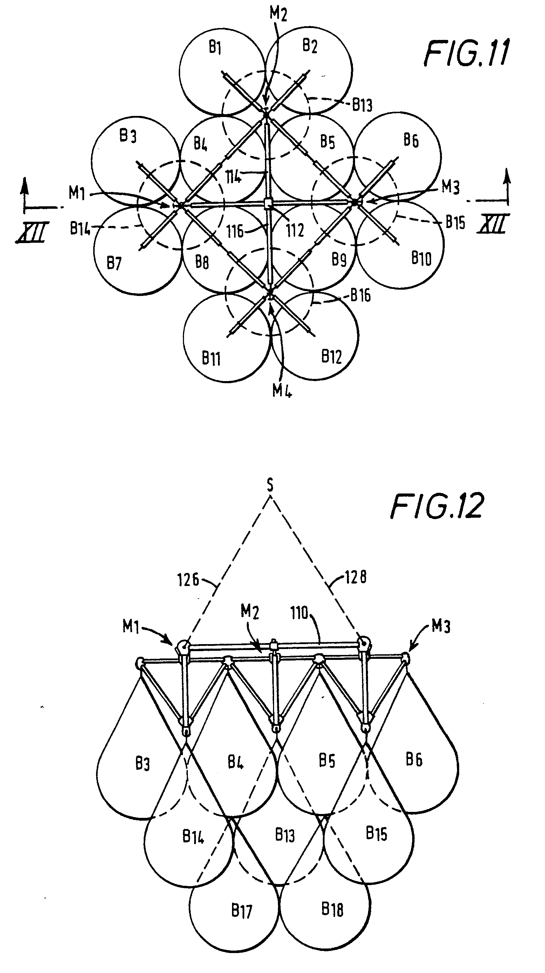

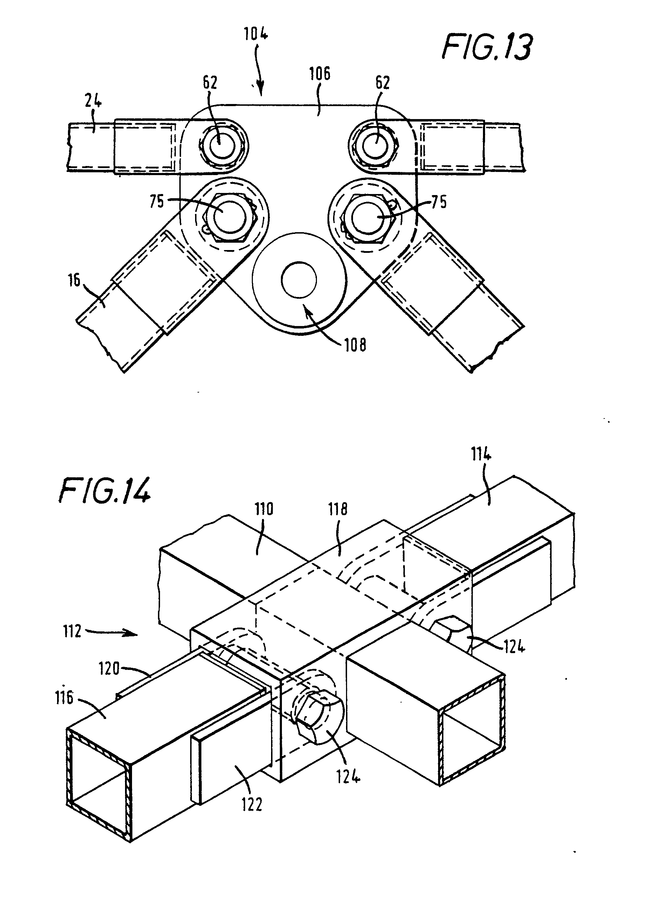

Referring to Figures 11 and 12, a four-module arrangement is shown in which four modules $M_1$, $M_2$, $M_3$ and $M_4$ are directly interconnected to form a square. The modules $M_1$, $M_2$, $M_3$ and $M_4$ are similar to the module 10 hereinbefore described apart from the fact that one of the joints 30 is replaced by the joint 104 shown in Figure 13.

Referring to Figure 13, the joint 104 comprises a centre plate 106 provided with a padeye 108. The centre plate 106 comprises four apertures through which one of the spacer bars 22, 24, 26 or 28 and one of the load bearing arms 14, 16, 18 or 20 from each of two adjacent modules is fastened using shackle bolts. Figure 13 shows a spacer bar 24 and a load bearing arm 16 from each of two modules and these are fastened to the centre plate 106 in an exactly analogous way to that used in the joint 30 as shown in Figures 4—6.

Figures 11 and 12 show the modules $M_1$ and $M_3$ interconnected by a cross-bar 110 which passes through a joint 112. A bar 114 interconnects the joint 112 and the module $M_2$ and a bar 116 interconnects the joint 112 and the module $M_4$. The cross-bar 110 and the bars 114 and 116 are all made of square section tubular steel.

The joint 112 is shown in detail in Figure 14 and comprises a metal sleeve 118 of square section comprising two aligned square apertures in opposed sides to accommodate the cross-bar 110. There are rounded end plates 120 and 122 welded to the end of each of the bars 114 and 116. Each end plate 120 and 122 has an aperture which is aligned with an aperture in the sleeve 118 and a bolt 124 is passed through these apertures to secure each of the bars 114 and 116 to the sleeve 118.

The bags $B_1$—$B_{20}$ represented schematically in Figures 11 and 12 are load testing bags of the type shown in Figure 7—10. The bags $B_1$—$B_{20}$ are arranged in three tiers, an upper tier comprising twelve bags $B_1$—$B_{12}$, an intermediate tier comprising four bags $B_{13}$—$B_{16}$ and a lower tier comprising four bags $B_{17}$—$B_{20}$.

The four-module arrangement is suspended from the device to be load tested using four cables extending from a support point S, each cable being attached to the padeye 96 on one of the modules $M_1$—$M_4$. Two of the cables 126 and 128 are indicated by dotted lines in Figure 12. The angular disposition of the padeye 96 of each module $M_1$—$M_4$ is such that the shackle connecting each cable to a padeye 96 is able to twist under load without applying a side load to the padeye 96.

The upper tier of bags $B_1$—$B_{12}$ is made up of a bag suspended from the outwardly projecting joint 30 of each of the modules $M_1$—$M_4$ (bags $B_1$—$B_3$, $B_6$, $B_7$ and $B_{10}$—$B_{12}$) and four further bags ($B_4$, $B_5$, $B_8$ and $B_9$) one each being suspended from the padeye 108 of the joint 104 interconnecting adjacent ones of the modules $M_1$—$M_4$. The bags $B_4$, $B_5$, $B_8$ and $B_9$ are each provided with a load supporting cable which extends through the bag to enable another bag to be suspended directly below the first bag. The weight of the lower bag is borne by the support from which the upper bag is suspended and an example of such an arrangement is disclosed in our U.K. Patent 2 047 414B.

The intermediate layer comprises the four bags $B_{13}$—$B_{16}$ and these are shown in dotted lines in Figure 11. The bags $B_{13}$—$B_{16}$ are each suspended from the padeye 88 at the bottom of the centre pin 12 of one of the modules $M_1$—$M_4$ and these bags each nest between four of the bags $B_1$—$B_{12}$ in the upper tier.

The lower tier comprises four bags $B_{17}$—$B_{20}$ each suspended by means of the load supporting cable extending through one of the bags $B_4$, $B_5$, $B_8$ and $B_9$ as mentioned above. Each of the bags $B_{17}$—$B_{20}$ lies directly below one of the bags $B_4$, $B_5$, $B_8$ and $B_9$ and is therefore not visible in Figure 11. Each of the bags $B_{17}$—$B_{20}$ nests between two of the bags $B_{13}$—$B_{16}$ in the intermediate tier.

In use, the four-module arrangement is suspended from a device to be load tested and the bags $B_1$—$B_{20}$ are suspended, when empty, according to the arrangement shown in Figures 11 and 12 and subsequently filled with fluid, for example, sea water. The bags $B_1$—$B_{20}$ are filled with fluid symmetrically and simultaneously so as to balance the weight of the fluid during filling.

For example, possible filling operations could include: filling bags $B_1$—$B_{12}$ simultaneously, subsequently filling bags $B_{13}$—$B_{16}$ simultaneously and filling bags $B_{17}$—$B_{20}$ simultaneously. It will be appreciated that many alternative filling sequences are possible.

After filling, adjacent ones of the bags $B_1$—$B_{20}$ in the upper tier abut one another thereby supporting each other against lateral forces thus obviating the need for equalising links interconnecting the eight joints 30. Adjacent ones of the bags $B_{17}$—$B_{20}$ in the lower tier also abut one another thereby supporting each other against lateral forces.

It will be seen that the three-tier arrangement shown in Figures 11 and 12 in which the bags $B_1$—$B_{20}$ nest in between one another is a particularly compact, space-saving arrangement. Each of the bags $B_1$—$B_{20}$, when filled with water, weighs 40 tonnes (40,000 kg) so that the entire weight of the load-testing arrangement is 800 tonnes (800,000 kg).

The four-module arrangement shown in Figures 11 and 12 can be used with less than twenty load testing bags provided the bags are arranged symmetrically, for example, using only bags $B_1$—$B_{16}$ or, alternatively, using only bags $B_3$—$B_{10}$ and $B_{13}$—$B_{20}$. It will be appreciated that other symmetrical arrangments are possible.

It will be understood that it is envisaged to provide support modules which are suitable for use with load testing bags over a wide weight range, for example, load testing bags which, when filled with water, have a weight in the range 10—50 tonnes (10,000—50,000 kg).

## Claims

1. A support module (10) for a plurality of load testing bags (B) comprising a support frame having a plurality of bag suspension means (42) from each of which a load testing bag (B) can be suspended at a common level, the plurality of bag suspension means being angularly and equidistantly spaced from a centrally disposed support means (96), characterised by having also a bag suspension means (88) disposed centrally at a lower level from which a load testing bag (B) can be suspended at the lower level so that the upper portion of the bag suspended from the lower level will nest between the lower portions of the bags suspended from their common level.

2. A support module according to claim 1, wherein the suspension means are at the apices of an inverted square base pyramid.

3. A support module according to claim 1 or claim 2, wherein the support frame is constituted by a plurality of interconnected struts comprising a vertical, load-bearing centre pin (12) having at its upper end the support means (96) and at its lower end the bag suspension means (88) for suspending a load testing bag (B) at the lower level; a plurality of spacing arms (22, 24, 26, 28) extending radially outwardly in a horizontal plane from the centre pin (12) adjacent its upper end; and an equal plurality of load bearing arms (14, 16, 18, 20) each extending radially outwardly from the centre pin (12) adjacent its lower end towards the radially outer end of a corresponding spacing arm, the radially outer end of each load bearing arm and of its corresponding spacing arm being connect to a bag suspension means (42).

4. A support module assembly being assembled from support modules as claimed in any of claims 1—3, for plurality of load testing bags, characterised in that a plurality of said support modules (10) are connected together at their outermost frame portions (104) or with tie bars (100) connecting the support modules at their support means (96).

**Patentansprüche**

1. Tragmodul (10) für eine Vielzahl von Beladungsprüfsäcken (B) mit einem Tragrahmen, der eine Vielzahl von Sackaufhängeeinrichtungen (42) umfaßt, an denen jeweils ein Beladungsprüfsack (B) auf einem gemeinsamen Niveau aufgehängt werden kann, wobei die Vielzahl von Sackaufhängeeinrichtungen (42) gleichwinklig und gleich beabstandet von einer zentral angeordneten Trageinrichtung (96) angeordnet ist, gekennzeichnet durch eine weitere, zentral auf einem geringeren Niveau angeordnete Sackaufhängeeinrichtung (88), an die ein Beladungsprüfsack (B) auf einem geringeren Niveau derart aufgehängt werden kann, daß der obere Abschnitt des auf dem geringeren Niveau aufgehängten Sackes zwischen den unteren Abschnitten der auf dem gemeinsamen Niveau aufgehängten Säcke eingesetzt ist.

2. Tragmodul nach Anspruch 1, dadurch gekennzeichnet, daß die Aufhängeeinrichtungen an den Ecken einer umgekehrten Pyramide mit viereckiger Grundfläche liegen.

3. Tragmodul nach Anspruch 1 oder 2, dadurch gekennzeichnet, daß der Tragrahmen aus einer Vielzahl von miteinander verbundenen Streben aufgebaut ist und einen senkrechten, tragenden Mittelbolzen (12), der an seinem oberen Ende die Trageinrichtung (96) und an seinem unteren Ende die Sackaufhängeeinrichtung (88) zum Aufhängen des auf dem geringeren Niveau angeordneten Beladungsprüfsackes (B) aufweist, eine Vielzahl von Abstandsarmen (22, 24, 26, 28), die nahe dem oberen Ende des Mittelbolzens (12) von diesem in einer horizontalen Ebene radial nach außen verlaufen, und eine gleiche Vielzahl von Tragarmen (14, 16, 18, 20) umfaßt, die jeweils nahe dem unteren Ende des Mittelbolzens (12) von diesem radial nach außen, zu dem radialen äußeren Ende des entsprechenden Abstandsarms verlaufen, wobei das radiale äußere Ende jedes Tragarms und des entsprechenden Abstandsarms mit einer Sackaufhängeeinrichtung (42) verbunden sind.

4. Tragmodulbaugruppe für eine Vielzahl von Beladungsprüfsäcken, die aus einer Vielzahl von Tragmodulen nach einem der Ansprüche 1 bis 3 gebildet ist, dadurch gekennzeichnet, daß eine Vielzahl von Tragmodulen (10) miteinander an ihren am weitesten außen liegenden Rahmenabschnitten (104) oder durch Verbindungsstangen (100) verbunden sind, die die Trageinrichtungen (96) miteinander verbinden.

**Revendications**

1. Module de support (10) pour une pluralité de sacs d'essai de charge (B) comprenant un cadre de support ayant une pluralité de moyens de suspension de sacs (42) à chacun desquels un sac d'essai de charge (B) peut être suspendu à un niveau commun, la pluralité de moyens de suspension de sacs étant espacés angulairement et à distances égales à partir d'un moyen de support (96) disposé en position centrale, caractérisé en ce qu'il comporte également un moyen de suspension de sacs (88) disposé en position centrale à un niveau inférieur à partir duquel un sac d'essai de charge (B) peut être suspendu au niveau inférieur de manière à ce que la partie supérieure du sac suspendu à partir du niveau inférieur se niche entre les parties inférieures des sacs suspendus à partir de leur niveau commun.

2. Module de support selon la revendication 1, dans lequel les moyens de suspension sont aux sommets d'une pyramide inversée à base carrée.

3. Module de support selon la revendication 1 ou la revendication 2, dans lequel le cadre de support est constitué par une pluralité d'étrésillons comprenant un axe central vertical porteur (12) ayant à son extrémité supérieure le moyen de support (96) et à son extrémité inférieure le moyen de suspension de sacs (88) destiné à suspendre un sac d'essai de charge (B) au niveau inférieur; une pluralité de bras d'espacement (22, 24, 26, 28) s'étendant radialement vers l'extérieur dans un plan horizontal à partir de l'axe central (12) au voisinage de son extrémité supérieure; et une pluralité égale de bras porteurs (14, 16, 18, 20) s'étendant chacun radialement vers l'extérieur à partir de l'axe central (12) au voisinage de son extrémité inférieure vers l'extrémité radiale externe d'un bras d'espacement correspondant, l'extrémité radiale externe de chaque bras porteur et de son bras d'espacement correspondant étant reliées à un moyen de suspension de sac (42).

4. Assemblage de modules de support assemblé à partir de modules de support tels que renvendiqués dans l'une quelconque des revendications 1—3 pour une pluralité de sacs d'essai de charge, caractérisé en ce qu'une pluralité desdits modules de support (10) sont reliés ensemble à leurs parties de cadre les plus à l'extérieur (104) ou au moyen de barres de liaison (100) reliant les modules de support à leurs moyens de support (96).

EP 0 169 063 B1

FIG.1

FIG.2

EP 0 169 063 B1

FIG.3

**FIG.4**

**FIG.5**

**FIG.6**

EP 0 169 063 B1

FIG.7

FIG.8

FIG.9

FIG.10

5

FIG.11

FIG.12

*FIG.13*

*FIG.14*